# EUROPEAN PATENT APPLICATION

(11) **EP 2 187 295 A2**
(43) Date of publication of application: **19.05.2010**
(21) Application number: 09174757.6
(22) Date of filing: 02.11.2009
(51) Int. Cl.: G06F 3/044

(54) **Touch module, fabrication method thereof, and mobile terminal having the same**

(30) Priority: 12.11.2008 KR 20080112417
(71) Applicant: LG Electronics, Inc., Seoul 150-721 (KR)
(72) Inventor: Oh, Han-Gyu, SEOUL (KR)
(74) Representative: Loisel, Bertrand

(57) **Abstract**

The present invention related to a touch module for a mobile terminal. The touch module includes a light-transmissive substrate and a touch-sensitive layer formed on the substrate. The touch-sensitive layer includes a first conductive layer formed on a surface of the substrate in a first light-transmissive pattern, a first insulating layer formed directly on a surface of the first conductive layer, and a second conductive layer formed on a surface of the first insulating layer in a second light-transmissive pattern different from the first light-transmissive pattern to determine a touched position.

## Description

### FIELD OF THE INVENTION

The present invention relates to a touch module of a mobile terminal.

### BACKGROUND OF THE INVENTION

Generally, terminals used for communicating signals may be categorized as mobile terminals (portable terminals) or stationary terminals according to whether the terminals can be moved. The mobile terminals may further be categorized as handheld terminals that can be directly carried by a user, or vehicle mounted terminals.

The terminals may also perform a diverse set of functions. For example, the terminals may be implemented in the form of multimedia players performing complex functions such as capturing images or video, reproducing music or video files, playing games, receiving broadcasts, etc. In order to support or increase the functions of the terminals, modifications to the structure and/or software of the terminals are needed.

For example, in order to provide a convenient user interface facilitating input operations with respect to the terminals, a device allowing inputs in a tactile manner has been introduced. In this case, however, because a touch module for detecting a user touch utilizes at least two insulating substrate layers, device thickness is large, light transmittance is low, and the width of a pattern for connecting arrangements of transparent sensors widens, leading to an increase in the overall size of the device. Therefore, what is needed is a device that overcomes these problems.

### SUMMARY OF THE INVENTION

Accordingly, one object of the present invention is to address the above-noted and other problems. Another object of the present invention is to reduce the overall thickness by reducing the number of substrates constituting a touch module. Still another object of the present invention is to provide a method for fabricating a touch module which is thinner and has a high light-transmittance.

To achieve these and other advantages and in accordance with the purpose of the present invention, as embodied and broadly described herein, the present invention provides in one aspect a touch module for a mobile terminal comprising a light-transmissive substrate, and a touch-sensitive layer formed on the substrate. The touch-sensitive layer comprises a first conductive layer formed on a surface of the substrate in a first light-transmissive pattern, a first insulating layer formed directly on a surface of the first conductive layer, and a second conductive layer formed on a surface of the first insulating layer in a second light-transmissive pattern different from the first light-transmissive pattern to determine a touched position.

The first light-transmissive pattern comprises a plurality of conductive lines arranged in a first direction, and the second light-transmissive pattern comprises a plurality of conductive lines arranged in a second direction perpendicular to the first direction. A second insulating layer is formed at an outer portion of the second conductive layer; and a conductive shield layer is formed as a film on a surface of the second insulating layer configured to interrupt electromagnetic waves. The first and second conductive layers are formed through deposition and comprise indium tin oxide (ITO). An area of the first insulating layer is as large as an area of the first or second conductive layers. The first insulating layer is partially formed at each crossing of a conductive line arranged in the first direction with a conductive line arranged in the second direction. The substrate comprises at least one of glass or plastic.

In another aspect of the invention, a mobile terminal comprises a display, and a touch module disposed on the display and detecting a touch applied thereto. The touch module comprises a light-transmissive substrate, a first conductive layer formed on a surface of the substrate in a first pattern, an insulating layer formed on a surface of the first conductive layer, and a second conductive layer formed on a surface of the insulating layer in a second pattern different from the first pattern to determine a touched position.

One surface of the substrate is exposed and the first conductive layer is formed on the surface of the substrate opposite to the exposed surface. The first pattern comprises a plurality of conductive lines arranged in a first direction, and the second pattern comprises a plurality of conductive lines arranged in a second direction perpendicular to the first direction. A second insulating layer is formed at an outer portion of the second conductive layer, and a conductive shield layer is formed as a film on a surface of the second insulating layer configured to interrupt electromagnetic waves. The first and second conductive layers are formed through deposition and comprise indium tin oxide (ITO). An area of the insulating layer is as large as an area of the first or second conductive layers. The insulating layer is partially formed at each crossing of a conductive line arranged in the first direction with a conductive line arranged in the second direction. The substrate comprises at least one of glass or plastic.

In a further aspect of the invention, a mobile terminal comprises a display, and a touch-sensitive layer disposed on the display and detecting a touch applied thereto. The touch sensitive layer comprises a first conductive layer formed on a surface of the display in a first pattern, an insulating layer formed on a surface of the first conductive layer, and a second conductive layer formed on a surface of the insulating layer in a second pattern different from the first pattern to determine a touched position.

In another aspect of the invention, a method for fabricating a touch module comprises forming a first conductive layer in a first pattern on a surface of a light-transmissive base, forming an insulating layer on a surface of the first conductive layer, and forming a second conductive layer in a second pattern different from the first pattern on a surface of the insulating layer to determine a touched position on the touch module.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 is a schematic block diagram of a mobile terminal according to an exemplary embodiment of the present invention.

FIG. 2 is a front perspective view of the mobile terminal according to an exemplary embodiment of the present invention.

FIG. 3 is a rear perspective view of the mobile terminal illustrated in FIG. 2 according to an exemplary embodiment of the present invention.

FIG. 4 is an exploded perspective view of the mobile terminal illustrated in FIG. 2 according to an exemplary embodiment of the present invention.

FIG. 5 is a sectional view of a touch module of FIG. 4 according to an exemplary embodiment of the present invention.

FIG. 6 is a plan view of the touch module according to an exemplary embodiment of the present invention.

FIGS. 7A-7F sequentially show a process of fabricating the touch module according to an exemplary embodiment of the present invention.

FIGS. 8A-8D sequentially show a process of fabricating the touch module according to an exemplary embodiment of the present invention.

FIGS. 9-12 are sectional views of different forms of a touch module according to an exemplary embodiment of the present invention.

FIGS. 13 and 14 are separated perspective views showing the mounting of the touch module and a display according to an exemplary embodiment of the present invention.

FIG. 15 is a sectional view of the touch module formed on the display of FIG. 13.

### DETAILED DESCRIPTION OF THE PREFERRED EMBODIMENTS

A mobile terminal according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself.

The mobile terminal described in the present invention may include mobile phones, smart phones, notebook computers, digital broadcast receivers, PDAs (Personal Digital Assistants), PMPs (Portable Multimedia Player), navigation devices, and the like. It would be understood by a person skilled in the art that the configuration according to the embodiments of the present invention can be also applicable to fixed types of terminals such as digital TVs, desktop computers, or the like, except for any elements especially configured for a mobile purpose.

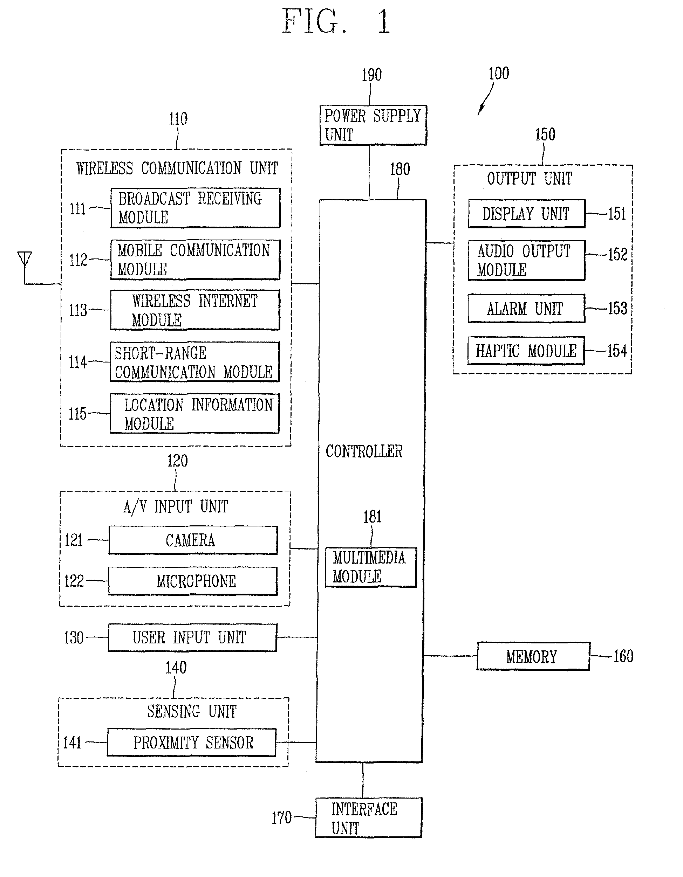

FIG. 1 is a block diagram of a mobile terminal according to an embodiment of the present invention. The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190. Although FIG. 1 shows the mobile terminal as having various components, it should be understood that implementing all of the illustrated components is not a requirement. Greater or fewer components may alternatively be implemented.

The elements of the mobile terminal will be described in detail as follows. The wireless communication unit 110 may include one or more components allowing radio communication between the mobile terminal 100 and a wireless communication system or a network in which the mobile terminal is located. For example, the wireless communication unit 110 may include at least one of a broadcast receiving module 111, a mobile communication module 112, a wireless Internet module 113, a short-range communication module 114, and a location information module 115.

The broadcast receiving module 111 receives broadcast signals and/or broadcast-associated information from an external broadcast management server (or other network entity) via a broadcast channel. The broadcast channel may include a satellite channel and/or a terrestrial channel. The broadcast management server may be a server that generates and transmits a broadcast signal and/or broadcast-associated information or a server that receives a previously generated broadcast signal and/or broadcast-associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast-associated information may refer to information associated with a broadcast channel, a broadcast program or a broadcast service provider. The broadcast-associated information may also be provided via a mobile communication network. Accordingly, the broadcast-associated information may be received by the mobile communication module 112.

The broadcast signal may exist in various forms. For example, it may exist in the form of an electronic program guide (EPG) of a digital multimedia broadcast (DMB), an electronic service guide (ESG) of a digital video broadcast-handheld (DVB-H), and the like.

The broadcast receiving module 111 may be configured to receive signals broadcast using various types of broadcast systems. In particular, the broadcast receiving module 111 may receive a digital broadcast using digital broadcast systems such as a multimedia broadcasting-terrestrial (DMB-T) system, a digital multimedia broadcasting-satellite (DMB-S) system, a digital video broadcast-handheld (DVB-H) system, the data broadcasting system known as media forward link only (MediaFLO®), an integrated services digital broadcast-terrestrial (ISDB-T) system, etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160 (or other type of storage medium). The mobile communication module 112 transmits and/or receives radio signals to and/or from at least one of a base station (e.g., access point, Node B, etc.), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. Wireless Internet access techniques implemented may include WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for checking or acquiring a location (or position) of the mobile terminal. A typical example of the location information module is a GPS (Global Positioning System) module.

The A/V input unit 120 is configured to receive an audio or video signal. The A/V input unit 120 may include a camera 121 (or other image capture device) and a microphone 122 (or other sound pick-up device). The camera 121 processes image data of still pictures or video obtained by an image capture device in an image capturing mode or a video capturing mode. The processed image frames may be displayed on a display unit 151 (or other visual output device).

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal. The user input unit 130 may include a keypad, a dome switch, a touch pad (e.g., a touch sensitive member that detects changes in resistance, pressure, capacitance, etc. due to being contacted), a jog wheel, a jog switch, and the like. In particular, when the touch pad is overlaid on the display unit 151 in a layered manner, it may form a touch screen.

The sensing unit 140 (or other detection means) may detect a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide-type mobile phone, the sensing unit 140 may sense whether the slide-type phone is opened or closed. In addition, the sensing unit 140 can detect whether the power supply unit 190 supplies power or whether the interface unit 170 is coupled with an external device. The sensing unit 140 may include a proximity sensor 141.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like.

The display may be configured to be transparent or light-transmissive to allow viewing through the exterior, and may be called a transparent display. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units (or other display means) according to its particular desired embodiment. For example, a plurality of display units may be separately or integrally disposed on one surface of the mobile terminal, or may be separately disposed on mutually different surfaces.

Meanwhile, when the display unit 151 and a sensor (hereinafter referred to as a 'touch sensor') for detecting a touch operation are overlaid in a layered manner to form a touch screen, the display unit 151 may function as both an input device and an output device. The touch sensor may have a form of a touch film, a touch sheet, a touch pad, and the like.

The touch sensor may be configured to convert pressure applied to a particular portion of the display unit 151 or a change in the capacitance or the like generated at a particular portion of the display unit 151 into an electrical input signal. The touch sensor may be configured to detect pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

With reference to FIG. 1, a proximity sensor 141 may be disposed within or near the touch screen. The proximity sensor 141 is a sensor for detecting the presence or absence of an object relative to a certain detection surface, or an object that exists nearby, using electromagnetic force or infrared rays without physical contact. Thus, the proximity sensor 141 may have a considerably longer life span compared with a contact type sensor, and may be utilized for various purposes.

Examples of the proximity sensor 141 may include a transmission type photoelectric sensor, a direct reflection type photoelectric sensor, a mirror-reflection type photo sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity sensor.

In the following description, for the sake of brevity, recognition of the pointer positioned close to the touch screen will be called a 'proximity touch', while recognition of the pointer actually contacting the touch screen will be called a 'contact touch'. Accordingly, when the pointer is in the proximity touch state, then the pointer may be positioned vertically with respect to the touch screen.

By employing the proximity sensor 141, a proximity touch and a proximity touch pattern (e.g., a proximity touch distance, a proximity touch speed, a proximity touch time, a proximity touch position, a proximity touch movement state, or the like) can be detected, and information corresponding to the detected proximity touch operation and the proximity touch pattern can be outputted to the touch screen.

The audio output module 152 may convert and output as sound audio, data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, or other sound generating device.

The alarm unit 153 (or other type of user notification means) may provide outputs to inform the occurrence of an event of the mobile terminal 100. Typical events may include call reception, message reception, key signal inputs, a touch input, etc. In addition to audio or video outputs, the alarm unit 153 may provide outputs in a different manner to inform the occurrence of an event. For example, the alarm unit 153 may provide an output in the form of vibrations (or other tactile or sensible outputs). When a call, a message, or other incoming communication is received, the alarm unit 153 may provide tactile outputs (i.e., vibrations) to inform the user thereof. By providing such tactile outputs, the user can recognize the occurrence of various events even if the mobile phone is in the user's pocket. Outputs informing the occurrence of an event may be also provided via the display unit 151 or the audio output module 152. The display unit 151 and the audio output module 152 may be classified as part of the alarm unit 153.

A haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects. This may include stimulation such as a pin arrangement vertically moving with respect to a skin contact, a spray force or suction force of air through a jet orifice or suction opening, a contact on the skin, an electrode contact, an electrostatic force contact, or an effect by reproducing the sense of cold and/or heat using an element that can absorb or generate heat.

The haptic module 154 may be implemented to allow the user to feel a tactile effect through a muscle sensation via the fingers or arm of the user, as well as transfer the tactile effect through a direct contact. Two or more haptic modules 154 may be provided according to the configuration of the mobile terminal 100.

The memory 160 may store software programs used for processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk, for example. Also, the mobile terminal 100 may be operated in relation to a web storage device that performs the storage function of the memory 160 over the Internet.

The interface unit 170 serves as an interface with all external devices connected with the mobile terminal 100. For example, the external devices may transmit data to the interface unit 170. The interface unit 170 may also receive and transmit power to each element of the mobile terminal 100, or transmit internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority for using the mobile terminal 100, and may include a user identity module (UIM), a subscriber identity module (SIM), a universal subscriber identity module (USIM), and the like. In addition, the device having the identification module (hereinafter referred to as 'identifying device') may take the form of a smart card. Accordingly, the identifying device may be connected with the terminal 100 via a port.

When the mobile terminal 100 is connected with an external cradle, the interface unit 170 may serve as a passage to allow power from the cradle to be supplied through the interface unit 170 to the mobile terminal 100, or may serve as a passage to allow various command signals inputted by the user from the cradle to be transferred to the mobile terminal through the interface unit 170. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured separate from the controller 180.

The controller 180 may also perform pattern recognition processing to recognize a handwriting input or a picture-drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or electronic units designed to perform the functions described herein. In some cases, such embodiments may be implemented by the controller 180.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

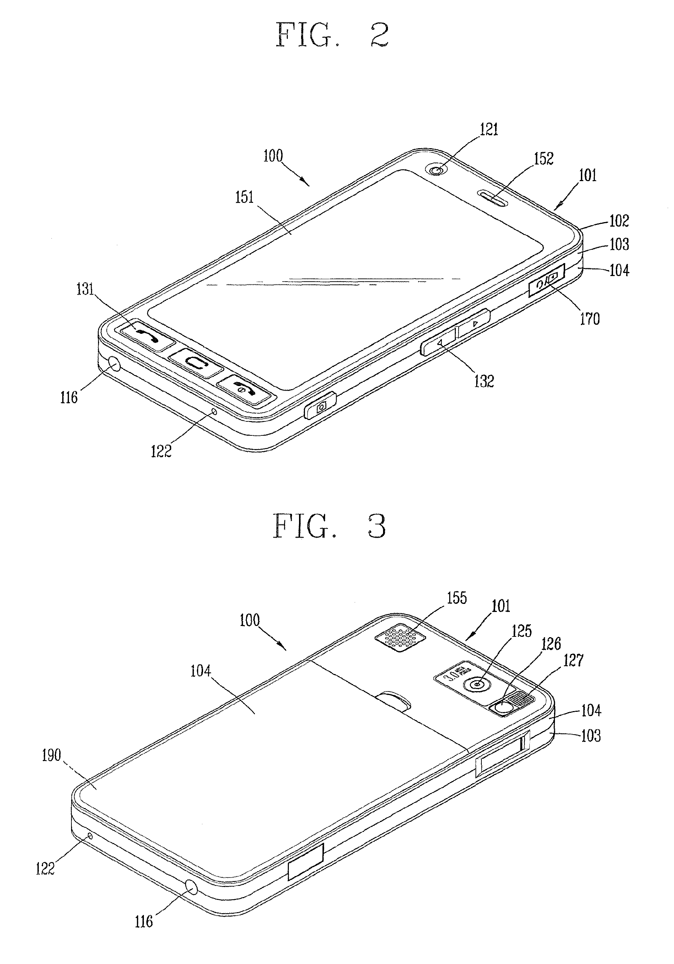

FIG. 2 is a front perspective view of the mobile terminal according to an exemplary embodiment of the present invention. The mobile terminal includes a bar-type terminal body 101. Without being limited thereto, the present invention can be also applicable to a slide-type mobile terminal, a folder-type mobile terminal, a swing-type mobile terminal, and the like, including two or more bodies.

The terminal body includes a case (or casing, housing, cover, etc.) constituting the external appearance of the terminal body. In the present exemplary embodiment, the case may be divided into a front case 102 and a rear case 104. Various electronic components are installed in the space between the front case 102 and the rear case 104. One or more intermediate cases 103 may be additionally disposed between the front case 102 and the rear case 104. The cases 102, 103 and 104 may be formed by injection-molding a synthetic resin, or may be made of a metallic material such as stainless steel (STS) or titanium (Ti), etc.

The display unit 151, the audio output module 152, the camera 121, the user input 130 comprising manipulations units 131, 132, the microphone 122, the interface 170, and the like, may be located on the terminal body 101, mainly, on the front case 102.

The display unit 151 occupies most of the front surface of the front case 102. The audio output module 152 and the camera 121 are disposed at a region adjacent to an end portion of the display unit 151, and the manipulation unit 131 and the microphone 122 are disposed at a region adjacent to another end portion of the display unit 151. The manipulation unit 132, the interface 170, and the like, may be disposed at side portions of the front case 102 and at the rear case 104.

The user input unit 130 may be manipulated to receive commands for controlling the operation of the mobile terminal 100, and may include the plurality of manipulation units 131 and 132. The manipulation units 131 and 132 may be generally called a manipulating portion, and can employ any method so long as they can be manipulated in a tactile manner by the user.

Content inputted by the first and second manipulation units 131 and 132 may be variably set. For example, the first manipulation unit 131 receives commands such as start, end, scroll, or the like, and the second manipulation unit 132 may receive commands for adjusting a sound level outputted from the audio output module 152, or converting to a touch recognition mode of the display unit 151, for example.

FIG. 3 is a rear perspective view of the mobile terminal illustrated in FIG. 2 according to an exemplary embodiment of the present invention. Referring to FIG. 3, a rear camera 125 may additionally be disposed on a rear surface of the terminal body 101. The rear camera 125 may have an image capture direction substantially opposite to that of the camera 121 (see FIG. 2) disposed on a front surface of the terminal body 101, and may support a different number of pixels (i.e., have a different resolution) than the camera 121.

For example, the front surface camera 121 may operate with a relatively lower resolution to capture an image(s) of the user's face and immediately transmit such image(s) to another party in real-time during video call communication or the like. Meanwhile the rear surface camera 125 may operate with a relatively higher resolution to capture images of general objects with high picture quality, which may not require immediate transmission in real time.

A flash 127 and a mirror 126 may be additionally disposed adjacent to the rear camera 125. The flash 127 may illuminate a subject to be captured by the rear camera 125. The mirror 126 allows the user to see himself when he wants to capture his own image (i.e., self-image capturing) by using the rear camera 125.

A rear audio output module 155 may be additionally disposed on the rear surface of the terminal body 101. The rear audio output module 155 may implement a stereoscopic function along with the audio output module 152 (see FIG. 2) disposed on the front surface of the terminal body 101, and may be used for implementing a speaker phone mode during call communication.

A broadcast signal receiving antenna 116 may be disposed at a side of the terminal body 101 in addition to an antenna supporting mobile communications. The antenna 116 forming a portion of the broadcast receiving module 111 (see FIG. 1) may be installed to be protracted.

A power supply unit 190 for supplying power to the mobile terminal 100 may be mounted on the terminal body 101. The power supply unit 190 may be installed in the terminal body or may be directly detached from the outside of the terminal body.

A touch pad for detecting a touch may be additionally mounted on the rear case 104. Such touch pad may be configured to be light-transmissive similar to the display unit 151.

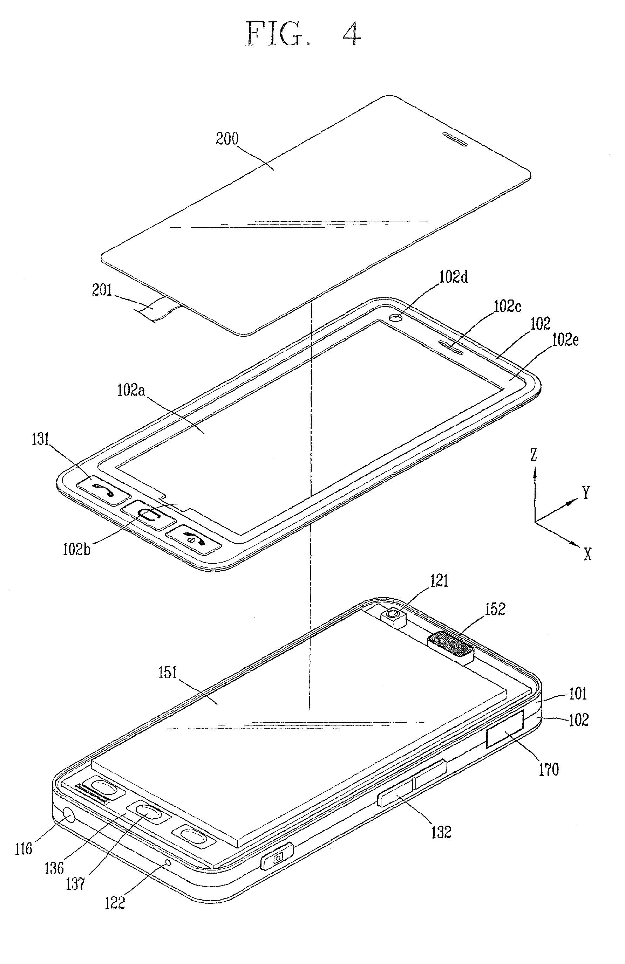

FIG. 4 is an exploded perspective view of the mobile terminal illustrated in FIG. 2 according to an exemplary embodiment of the present invention. Referring to FIG. 4, a touch module 200 is mounted on the front surface of the front case 102 to allow a touch input. The touch module 200 is exposed from the front surface of the mobile terminal 100 to serve as a window protecting the display 151 disposed at an inner side thereof. Thus, the touch module 200 may be referred to as a window-integrated type touch module. Here, the touch module 200 is one of various embodiments of the haptic module 154 as described above with reference to FIG. 1. The haptic module 154 includes the touch module 200.

The front case 102 includes a display hole 102a, a sound hole 102c for outputting a sound of the audio output module 152, and a camera hole 102d. The display hole 102a is approximately the same size as the display 151 so as not to cover the display 151. The display hole 102a having a similar size to the display 151 prevents deformation of the touch module 200 and allows the display hole 102a to support the touch module 200. When the display 151 is configured to be directly attached to the touch module 200, the display hole 102a may be omitted.

Still referring to FIG. 4, a passage hole 102b formed at one side of the display hole 102a allows a connection unit, such as a flexible printed circuit (PC) or cable, to be connected with the touch module 200 by passing through the passage hole 102b. A mounting part 102e formed near the display hole 102a allows the touch module 200 to be mounted thereon. The mounting part 102e may be formed with a depth corresponding to the thickness of the touch module 200 so that the touch module 200 and the front case 102 are coplanar.

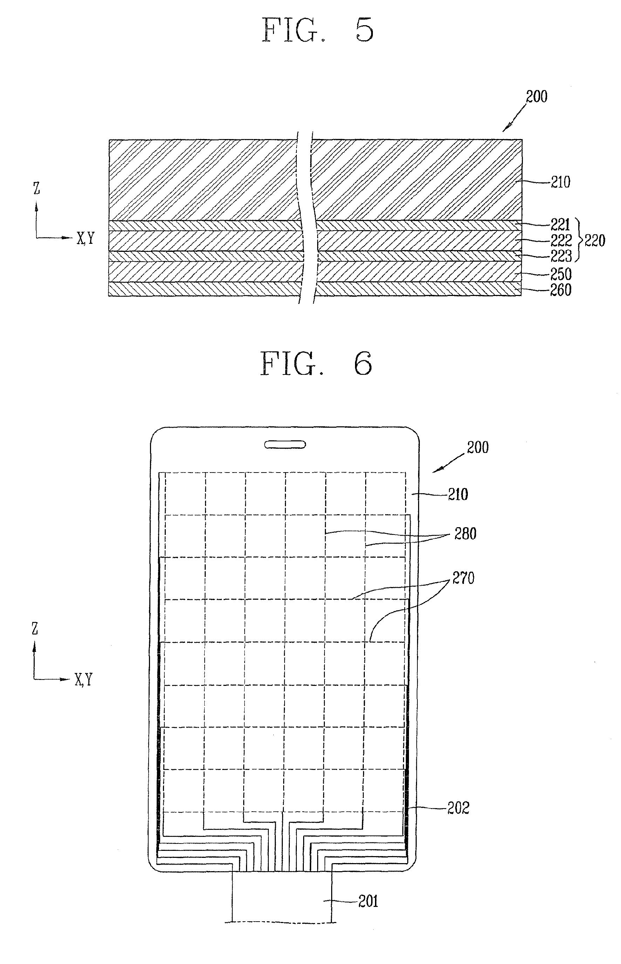

FIG. 5 is a sectional view of a touch module of FIG. 4 according to an exemplary embodiment of the present invention. FIG. 6 is a plan view of the touch module according to an exemplary embodiment of the present invention. Referring to FIG. 5, the touch module 200 includes a plurality of layers including a substrate 210, a touch sensitive layer 220, and a shield layer 260.

The substrate 210 serves as a subject allowing a first conductive layer 221, a second conductive layer 223, and the shield layer 260 to be formed thereon, and is formed with sufficient rigidity to resist deformation due to a touch operation or an impact. The substrate 210 may be made of glass, tempered glass, plastic, tempered plastic, and the like. In particular, when the substrate 210 is made of tempered glass, it can be thinly formed thin while having a high rigidity. Also, when the substrate 210 is made of tempered glass, the width of a conductive line constituting the first conductive layer 221 may advantageously be finer.

The substrate 210 may be formed to be light-transmissive allowing light of the display 151 to pass through the substrate 210. Accordingly, a portion of the substrate 210 that does not correspond to a display area of the display 151 may be formed to be opaque to prevent an internal structure from being seen. The light-transmissive area and the opaque area may be printed or attached on a lower surface of the substrate 210, or may be divided by opaque dyes applied to the interior of the substrate 210.

The touch sensitive layer 220 detects a touch applied to the touch module 200, including the first conductive layer 221, a first insulating layer 222, and the second conductive layer 223. The first and second conductive layers 221 and 223 are formed to have different patterns and include a plurality of conductive lines to determine a touched position. Namely, as shown in FIG. 6, if the first conductive layer 221 includes a plurality of conductive lines 270 arranged in an X-axis direction, the second conductive layer 223 includes a plurality of conductive lines 280 arranged in a Y-axis direction.

Accordingly, when a change in an electrical signal is generated from a particular conductive line in the X-axis direction from the X-axis directional conductive lines 270, and a change in an electrical signal is generated from a particular conductive line in the Y-axis direction from the Y-axis directional conductive lines 280, a crossing of the particular conductive line in the X-axis direction and the particular conductive line in the Y-axis direction corresponds to a touched position.

The first and second conductive layers 221 and 223 may be formed via deposition in order to be light-transmissive. In more detail, the first and second conductive layers 221 and 223 may be made of indium tin oxide (ITO). In addition, the first conductive layer 221 or the second conductive layer 223 may be formed via a printing method.

The first and second conductive layers 221 and 223 may be short-circuited by the first insulating layer 222. The first insulating layer 222 may be formed with the same area as that of the substrate 210, or may have an area occupying only a portion of the substrate 210. Portions to be short-circuited between the first and second conductive layers 221 and 223 by the first insulating layer 222 correspond to the crossings of the conductive lines of the first conductive layer 221 and the conductive lines of the second conducive layer 223. Therefore, the first insulating layer 222 may be much smaller in area than the substrate 210.

Because the first and second conductive layers 221 and 223 are formed in such a pattern as to detect a touch applied thereto on a single substrate 210, their thickness is thin compared with the related art in which a first substrate with a first conductive layer formed thereon and a second substrate with a second conductive layer formed thereon are separately fabricated and then integrally attached by an adhesive. In addition, because a layer through which light is to pass is reduced, visibility of the display 151 is improved. Accordingly, by improving visibility, recognition of content output to the display 151 in the field where solar light is strong is facilitated.

The shield layer 260 is formed on a lower surface of the second conductive layer 223 in order to reduce electromagnetic interference by other components. The shield layer 260 may also be formed after a second insulating layer 250 is formed on the second conductive layer 223. The shield layer 260 may have a film form, and formed via deposition or a printing method. The shield layer 260 may be made of ITO in order to be light transmissive.

The first and second insulating layers 222 and 250 are formed on the first and second conductive layers 221 and 223, respectively, and may be made of a resin or the like. The first and second insulating layers 222 and 250 may have a processed surface for forming the second conductive layer 223 and the shield layer 260 thereon, respectively.

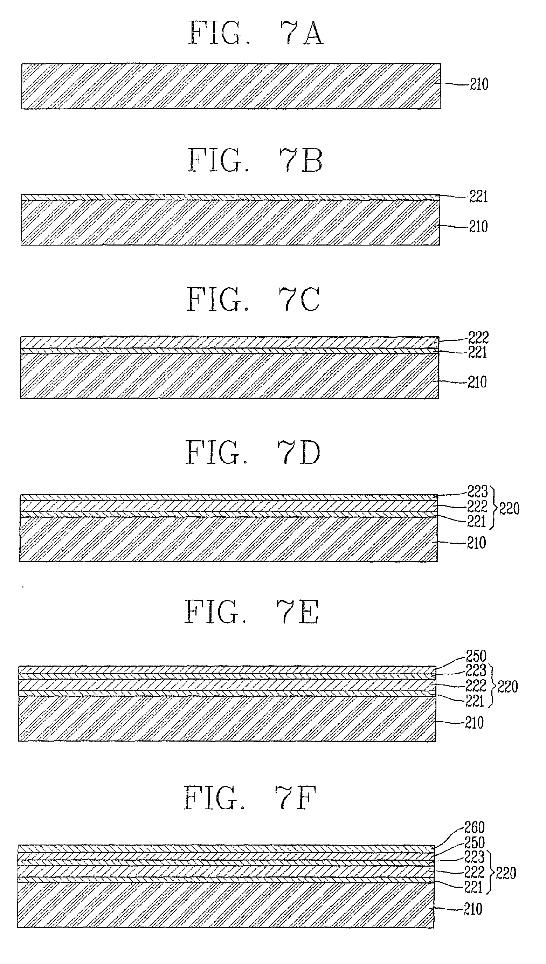

FIGS. 7A-7F sequentially illustrate a process of fabricating the touch module according to an exemplary embodiment of the present invention. Referring to FIG. 7A, the substrate 210, which is an overall frame of the touch module 200, is prepared. The substrate 210 may be prepared by processing glass or plastic with a particular thickness as described above with reference to FIG. 5.

Referring to FIG. 7B, the first conductive layer 221 is attached to the surface of the substrate 210. The first conductive layer 221 may be formed to have the X-axis directional or Y-axis directional patterns as described above. In order to form the conductive lines, a deposition or printing method may be used, and a masking process may be performed.

Referring to FIG. 7C, after the first conductive layer 221 is formed, the first insulating layer 222 is formed on the surface of the first conductive layer 221. The first insulating layer 222 may be formed by disposing a resin on the surface of the first conductive layer 221 and hardening it. The first insulating layer 222 may be formed on the entire surface of the first conductive layer 221, or only on a portion required to be insulated.

Referring to FIG. 7D, after the first insulating layer 222 is formed, the second conductive layer 223 is formed on the surface of the first insulating layer 222. The second conductive layer 223 is formed in a direction different from the direction in which the first conductive layer 221 is arranged. In order to form the conductive lines, a deposition or printing method may be used, and a masking process may be performed.

Referring to FIG. 7E, after the second conductive layer 223 is formed, the second insulating layer 250 is formed on the surface of the second conductive layer 223. The second insulating layer 250 may be formed according to the same method as that used for forming the first insulating layer 222. The second insulating layer 250 may be formed on the entire surface of the second conductive layer 223, or only on a portion required to be insulated. Referring to FIG. 7F, after the second insulating layer 250 is formed, the shield layer 260 is formed on the surface of the second insulating layer 250.

In this manner, the conductive layers 221 and 223 and the shield layer 260 are formed on a single substrate 210. Therefore, a process of integrally attaching a substrate with a conductive layer formed thereon and another substrate with another conductive layer formed thereon by an adhesive is not necessary.

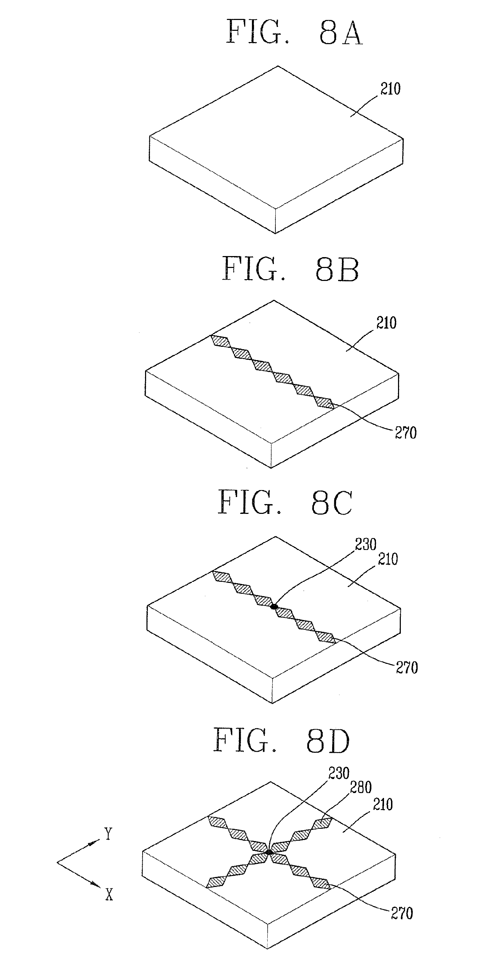

FIGS. 8A-8D sequentially show a process of fabricating the touch module according to an exemplary embodiment of the present invention. When the substrate 210 is prepared as shown in FIG. 8A, the first conductive line 270 is formed in the x-axis direction as shown in FIG. 8B. The first conductive line 270 may have a pattern in which a narrow portion and a wide portion are regularly repeated.

Next, as shown in FIG. 8C, the insulating layer 230 is formed on a portion of the first conductive line 270 where a Y-axis directional conductive line 280 may cross the first conductive line 270. Namely, the insulating layer 230 is not formed on the entire surface of the substrate 210, but formed on a portion of the substrate 210.

Accordingly, as shown in FIG. 8D, the second conductive line 280 is formed in the y-axis direction of the substrate 210, and formed on the surface of the insulating layer 230 to cross the first conductive line 270. In this manner, use of the insulating layer 230 is minimized, and light transmittance of the touch module 200 is improved while further reducing its overall thickness.

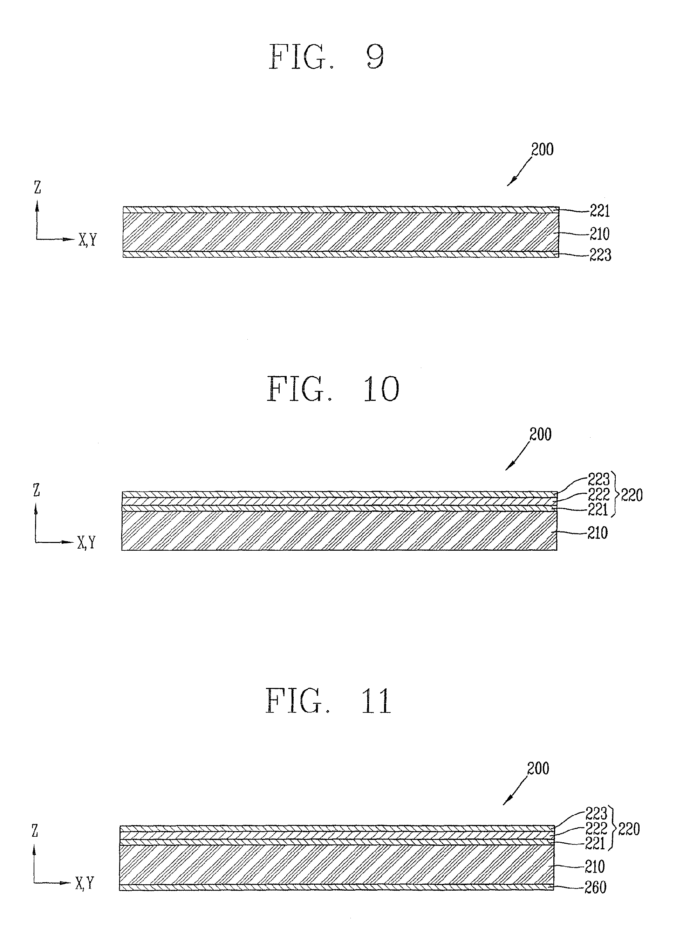

FIGS. 9 to 12 are sectional views of different forms of a touch module according to an exemplary embodiment of the present invention. Generally, a touch module 200 includes a substrate 210 having a first conductive layer 221 and second conductive layer 223 formed thereon. Referring to FIG. 9, the touch module 200 may be formed such that the first conductive layer 221 is on an upper surface of the substrate 210 and the second conductive layer is on a lower surface of the substrate 210.

Referring to FIG. 10, the touch module 200 may be formed such that the first and second conductive layers 221 and 223 are formed on the upper surface of the substrate 210. Particularly, the touch module 200 may be fabricated such that after the first conductive layer 221 is formed on the upper surface of the substrate 210, an insulating layer 222 may be formed on the first conductive layer 221. Thereafter, the second conductive layer 223 may be formed on the insulating layer 222. A protection layer may further be formed on the second conductive layer 223 to protect the touch module 200.

Referring to FIG. 11, the touch module 200 may additionally include a shield layer 260 formed on the lower surface of the substrate 210 to prevent electromagnetic interference. In this case, because the first conductive layer 221, the second conductive layer 223, and the shield layer 260 are formed on a single substrate 210, there is little increase in the thickness of the touch module 200.

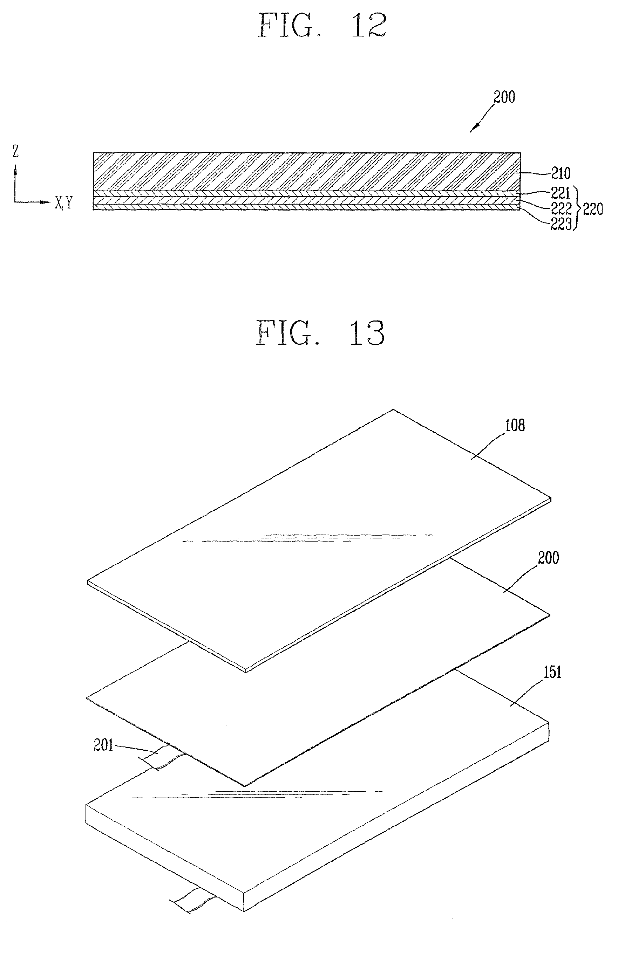

Referring to FIG. 12, the touch module 200 may be formed such that the first and second conductive layers 221 and 223 are formed on the lower surface of the substrate 210. Particularly, the touch module 200 may be fabricated such that after the first conductive layer 221 is formed on the lower surface of the substrate 210, the insulating layer 222 may be formed on the lower surface of the first conducive layer 221. Thereafter, the second conductive layer 223 may be formed on the lower surface of the insulating layer 222. According to this embodiment, the substrate 210 is the object with which the user's finger comes in contact when performing a touch input, for example. Thus, a window-type structure is not required.

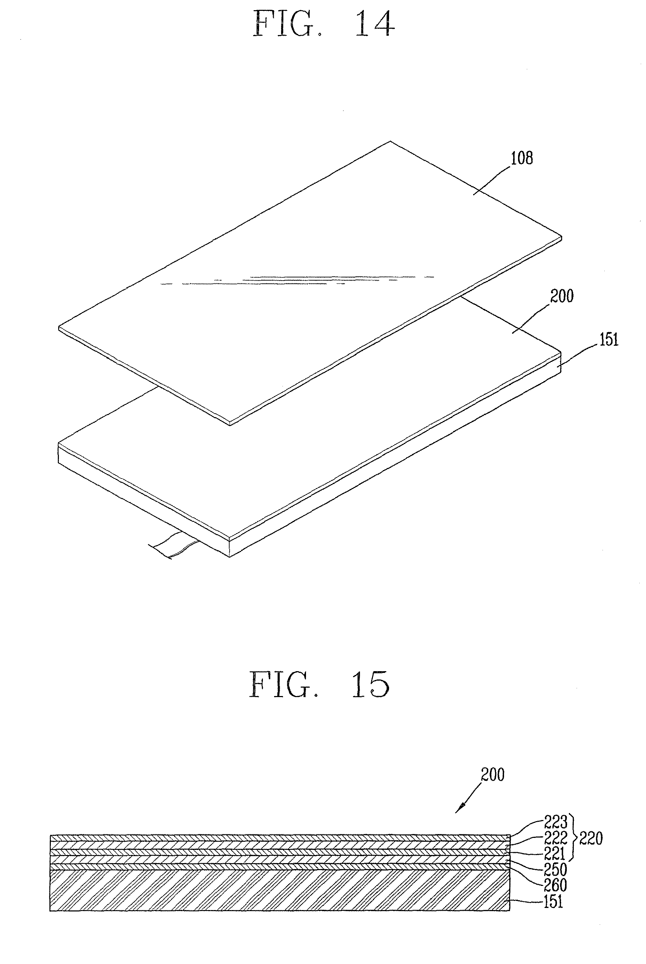

FIGS. 13 and 14 are separated perspective views showing the mounting of the touch module and a display according to an exemplary embodiment of the present invention. Referring to FIG. 13, a window 108 with which the user's finger may contact is disposed at an upper side of the touch module 200, and a display 151 is disposed at a lower side of the touch module 200. The touch module 200 may have the structures described with respect to FIGS. 4 to 12 above. The window 108, the touch module 200 and the display 151 may be separated, or may be integrally attached by an adhesive.

Referring to FIG. 14, the touch module 200 is formed on the display 151. Particularly, first and second conductive layers 221 and 222 of the touch module 200 are formed on an upper surface of a display panel constituting the display 151. The display panel may be made of made of glass or plastic, for example.

Furthermore, as shown in FIG. 15, the shield layer 260 may be formed on the surface of the display 151, the first insulating layer 250 formed on the upper surface of the shield layer 260, and the first conductive layer 221 formed on the surface of the first insulating layer 250. This is different from the case where the touch module 200 is attached to the surface of the display 151 by an adhesive or the like. Accordingly, complexity of the fabrication process due to elements being separately fabricated, fabrication cost, as well as the overall thickness of the mobile terminal is reduced.

As so far described, the touch module according to the exemplary embodiments of the present invention has many advantages. For example, because a conductive layer for detecting a touch is formed on a single substrate, module thickness is reduced and light transmittance is increased compared to a module where the conductive layers are respectively formed on different substrates and attached by an adhesive. In addition, because the different conductive layers are directly stacked on the single substrate, the conductive layer cannot deviate from its set position, and therefore minimize degradation of accuracy.

The mobile terminal having the external module as described above is not limitedly applied to the configurations and methods of the embodiments as described. As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A touch module (200) for a mobile terminal (100) comprising:
a light-transmissive substrate (210); and
a touch-sensitive layer (220) formed on the substrate, the touch-sensitive layer (220) comprising a first conductive layer (221) formed on a surface of the substrate in a first light-transmissive pattern , a first insulating layer (222) formed directly on a surface of the first conductive layer, and a second conductive layer (223) formed on a surface of the first insulating layer in a second light-transmissive pattern different from the first light-transmissive pattern to determine a touched position.

2. The touch module of claim 1, wherein the first light-transmissive pattern comprises a plurality of conductive lines (270) arranged in a first direction, and the second light-transmissive pattern (280) comprises a plurality of conductive lines arranged in a second direction perpendicular to the first direction.

3. The touch module of claims 1 or 2, further comprising:
a second insulating layer (250) formed at an outer portion of the second conductive layer; and
a conductive shield layer (260) formed as a film on a surface of the second insulating layer configured to interrupt electromagnetic waves.

4. The touch module of any one of claims 1 to 3, wherein the first and second conductive layers (221,223) are formed through deposition.

5. The touch module of any one of claims 1 to 4, wherein the first and second conductive layers (221,223) comprise indium tin oxide (ITO).

6. The touch module of any one of claims 1 to 5, wherein an area of the first insulating layer (222) is as large as an area of the first or second conductive layers (221,223).

7. The touch module of claim 2, wherein the first insulating layer (230) is partially formed at each crossing of a conductive line arranged in the first direction with a conductive line arranged in the second direction.

8. The touch module of any one of claims 1 to 7, wherein the substrate comprises at least one of glass or plastic.

9. A mobile terminal (100) comprising:
a display (151); and
a touch module (200) disposed on the display and detecting a touch applied thereto,
wherein the touch module (200) comprises a light-transmissive substrate (210), a first conductive layer (221) formed on a surface of the substrate in a first pattern, an insulating layer (222) formed on a surface of the first conductive layer, and a second conductive layer (223) formed on a surface of the insulating layer in a second pattern different from the first pattern to determine a touched position.

10. The mobile terminal of claim 9, wherein one surface of the substrate (210) is exposed and the first conductive layer (221) is formed on the surface of the substrate (210) opposite to the exposed surface.

11. The mobile terminal of claims 9 or 10, wherein the first pattern comprises a plurality of conductive lines (270) arranged in a first direction, and the second pattern comprises a plurality of conductive lines (280) arranged in a second direction perpendicular to the first direction.

12. The mobile terminal of any one of claims 9 to 11, further comprising:
a second insulating layer (250) formed at an outer portion of the second conductive layer; and
a conductive shield layer (260) formed as a film on a surface of the second insulating layer configured to interrupt electromagnetic waves.

13. The mobile terminal of any one of claims 9 to 12, wherein the first and second conductive layers (221,223) are formed through deposition.

14. The mobile terminal of any one of claims 9 to 13, wherein the first and second conductive layers (221,223) comprise indium tin oxide (ITO).

15. The mobile terminal of any one of claims 9 to 14, wherein the substrate (210) comprises at least one of glass or plastic.
